# EUROPEAN PATENT APPLICATION

(11) **EP 2 204 639 A1**
(43) Date of publication of application: **07.07.2010**
(21) Application number: 09177939.7
(22) Date of filing: 03.12.2009
(51) Int. Cl.: G01C 23/00, G08G 5/00

(54) **Systems and methods for enhancing terrain elevation awareness**

(30) Priority: 18.12.2008 US 338708
(71) Applicant: Honeywell International Inc., Morristown, NJ 07962 (US)
(72) Inventor: Gannon, Aaron, Morristown, NJ 07962-2245 (US); Feyereisen, Thea L., Morristown, NJ 07962-2245 (US); He, Gang, Morristown, NJ 07962-2245 (US)
(74) Representative: Buckley, Guy Julian

(57) **Abstract**

A display system for an aircraft is provided. The display includes a processing unit configured to receive terrain data and navigation data and to supply display commands with symbology based on the terrain data and navigation data; and a display device coupled the processing unit and configured to receive the display commands and operable to render a three-dimensional view with the symbology. The symbology includes terrain, a zero pitch line, and elevation symbology indicating a relative elevation between the zero pitch line and a position in the view.

## Description

### TECHNICAL FIELD

The present invention generally relates to aircraft display systems and methods and, more particularly, to systems and methods that display images for enhancing terrain elevation awareness.

### BACKGROUND

Computer generated aircraft displays have become highly sophisticated and capable of displaying a substantial amount of flight management, navigation, and control information that gives flight crews more effective control of the aircraft and a reduction in workload. In this regard, electronic displays, such as Heads-Up Displays (HUDs) and Heads-Down Displays (HDDs), are used in aircraft as Primary Flight Displays. For example, the Primary Flight Display can combine critical flight instrumentation (e.g., altitude, attitude, heading, airspeed, vertical speed instruments) and primary engine instrument indicators into a single, readily interpretable display.

Some Primary Flight Displays may provide a 3D, synthetic perspective view of the terrain surrounding the aircraft, including man-made and natural terrain. However, computer generated, synthetic perspective views may not provide a pilot with complete situational awareness. Designers are constantly attempting to enhance awareness, particularly with respect to terrain profiles, without unnecessarily cluttering the display.

Accordingly, it is desirable to provide systems and methods that enhance terrain profile awareness on a visual display, such as, for example, a Primary Flight Display, similar electronic aircraft displays, and other types of electronic displays. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with one exemplary embodiment, a display system for an aircraft is provided. The display includes a processing unit configured to receive terrain data and navigation data and to supply display commands with symbology based on the terrain data and navigation data; and a display device coupled the processing unit and configured to receive the display commands and operable to render a three-dimensional view with the symbology. The symbology includes terrain, a zero pitch line, and elevation symbology indicating a relative elevation between the zero pitch line and a position in the view.

In accordance with another exemplary embodiment, a method is provided for displaying symbology on a Primary Flight Display (PFD) of an aircraft. The method includes displaying a synthetic 3D view of terrain that includes a zero pitch reference line, wherein the terrain includes a first position with an elevation; and displaying symbology in the view indicating the elevation at the first position relative to the zero pitch reference line.

In accordance with yet another exemplary embodiment, a Primary Flight Display system for an aircraft is provided. The PFD includes a processing unit configured to receive terrain data and navigation data and to supply display commands with symbology based on the terrain data and navigation data; and a display device coupled the processing unit and configured to receive the display commands and operable to render a three-dimensional view with the symbology. The symbology includes terrain, a zero pitch line, and elevation symbology including a plurality of drop lines. The drop lines include a first drop line to a high point within the terrain above the zero pitch reference line, a second drop line a high point within the terrain below the zero pitch reference line, a third drop line to a low point within the terrain, and a fourth drop line to a landing area.

### BRIEF DESCRIPTION OF THE DRAWINGS

The present invention will hereinafter be described in conjunction with the following drawing figures, wherein like numerals denote like elements, and wherein:

FIG. 1 is a functional block diagram of an aircraft display system according to an exemplary embodiment;

FIG. 2 depicts an exemplary image that may be rendered by the aircraft display system of FIG. 1; and

FIG. 3 is a flowchart describing an exemplary method for enhancing terrain profile awareness.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

Broadly, exemplary embodiments described herein provide visual display systems and methods for aircraft. More specifically, the visual display systems and methods enhance terrain elevation awareness. In one embodiment, symbology is displayed that indicates the elevation of terrain relative to the zero pitch reference line, such as at range rings. Drop lines that extend from the zero pitch reference line to points of interest, such as in the terrain, can be provided. The drop lines can be provided for the highest and lowest elevation points in various regions of the display.

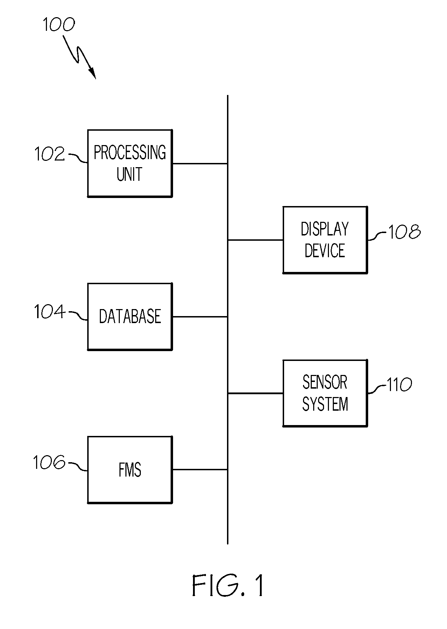

FIG. 1 depicts a block diagram of an exemplary aircraft visual display system 100 for displaying symbology that enhances terrain awareness. In the exemplary embodiment shown, the system 100 includes a processing unit 102, a database 104, a flight management system 106, a display device 108, and a sensor system 110. Although the system 100 appears in FIG. 1 to be arranged as an integrated system, the system 100 is not so limited and can also include an arrangement whereby one or more of the processing unit 102, the database 104, the flight management system 106, the display device 108, and the sensor system 110 are separate components or subcomponents of another system located either onboard or external to an aircraft. Also, for example, the system 100 can be arranged as an integrated system (e.g., aircraft display system, Primary Flight Display system, a Head Up Display with SVS or EVS as an overlay, a "near to eye display" system, or a head mounted display system, etc.) or a subsystem of a more comprehensive aircraft system (e.g., flight management system, navigation and control system, target aiming and control system, collision alert and/or avoidance system, weather avoidance system, etc.). The system 100 can be utilized in an aircraft, such as a helicopter, airplane, or unmanned vehicle. Moreover, exemplary embodiments of the system 100 can also be utilized in spacecraft, ships, submarines, fixed wing and rotor aircraft, such as helicopters, as well as other types of vehicles. For simplicity, embodiments are described below with reference to "aircraft."

The processing unit 102 can be a computer processor associated with a Primary Flight Display. Generally, the processing unit 102 receives and/or retrieves flight management information (e.g., from the flight management system 106) and landing, target and/or terrain information (e.g., from database 104 or sensor system 110). The processing unit 102 generates display control signals for a visual display of the flight management information, which includes navigation and control symbology such as a zero pitch reference line, heading indicators, tapes for airspeed and altitude, flight path information, RNP information, and any other information desired by a flight crew. As discussed in further detail below, the processing unit 102 may additionally receive and integrate terrain data from the database 104 and sensor system 110, and generates display control signals based on the terrain data. The processing unit 102 then sends the generated display control signals to a display device (e.g., the display device 108). More specific functions of the processing unit 102 will be discussed below.

Database 104 is coupled to processing unit 102 and can be a memory device (e.g., non-volatile memory, disk, drive, tape, optical storage device, mass storage device, etc.) that can store digital landing, waypoint, and target location as either absolute coordinate data or as a function of an aircraft's position. Database 104 can additionally include other types of navigation information, such as information used to calculate flight path. Database 104 can also include, for example, a terrain database, which includes the locations and elevations of natural and man-made terrain. In the embodiment discussed herein, navigation points such as the location of waypoints, landing pads, and runways may be considered terrain. The terrain may also include obstacles, such as buildings and vehicles. Obstacle data can be stored together with terrain database or in a separated obstacle-only database. The geographic locations and height of the obstacles for various avionics applications can be obtained through survey or through various reporting services.

The sensor system 110 is coupled to the processing unit 102 and can include any suitable sensor for detecting terrain and providing data to the processing unit 102 based on the detected terrain. The sensor system 110 can include sensors such as radar, LIDAR, or forward-looking infrared (FLIR). Other types of imaging sensors may include types such as visible light, millimeter-wave radar, X-band weather radar, etc. In one embodiment, the sensor system 110 is a stand-alone system, although in other embodiments, the sensor system 110 can be used to completely or partially verify database 104. The sensor collected data, after additional verifications, may be later inserted into the database 104 for future uses.

The flight management system 106 is coupled to processing unit 102, and can provide navigation data associated with the aircraft's current position and flight direction (e.g., heading, course, track, etc.) to the processing unit 102. The navigation data provided to the processing unit 102 can also include information about the aircraft's airspeed, altitude, pitch, and other important flight information. In exemplary embodiments, the flight management system 106 can include any suitable position and direction determination devices that are capable of providing the processing unit 102 with at least an aircraft's current position (e.g., in latitudinal and longitudinal form), the real-time direction (heading, course, track, etc.) of the aircraft in its flight path, the waypoints along the flight path, and other important flight information (e.g., pitch, airspeed, altitude, attitude, etc.). Such information can be provided to the processing unit 102 by, for example, an Inertial Reference System (IRS), Air-data Heading Reference System (AHRS), and/or a global positioning system (GPS).

The system 100 also includes the display device 108 coupled to the processing unit 102. The display device 108 may include any device or apparatus suitable for displaying various types of computer generated symbols and information representing at least pitch, heading, flight path, airspeed, altitude, landing information, waypoints, targets, elevation, obstacle, terrain, and slope data in an integrated, multi-color or monochrome form. Using data retrieved (or received) from the flight management system 106, the processing unit 102 executes one or more algorithms (e.g., implemented in software) for determining the position of the various types of desired information on the display device 108. The processing unit 102 then generates a plurality of display control signals representing this data, and sends display control signals to the display device 108. The display device 108 and/or processing unit 102 may include a graphics display generator for generating the appropriate symbology on the screen of the display device 108, as discussed in greater detail below. In this embodiment, the display device 108 is an aircraft cockpit, multi-color display (e.g., a Primary Flight Display).

Although a cockpit display screen may be used to display the above-described flight information symbols and data, any suitable type of display medium capable of visually presenting multi-colored or monochrome flight information for a pilot or other flight crew member can be provided, such as, for example, various CRT and flat-panel display systems (e.g., CRT displays, LCDs, OLED displays, plasma displays, projection displays, HDDs, HUDs, etc.).

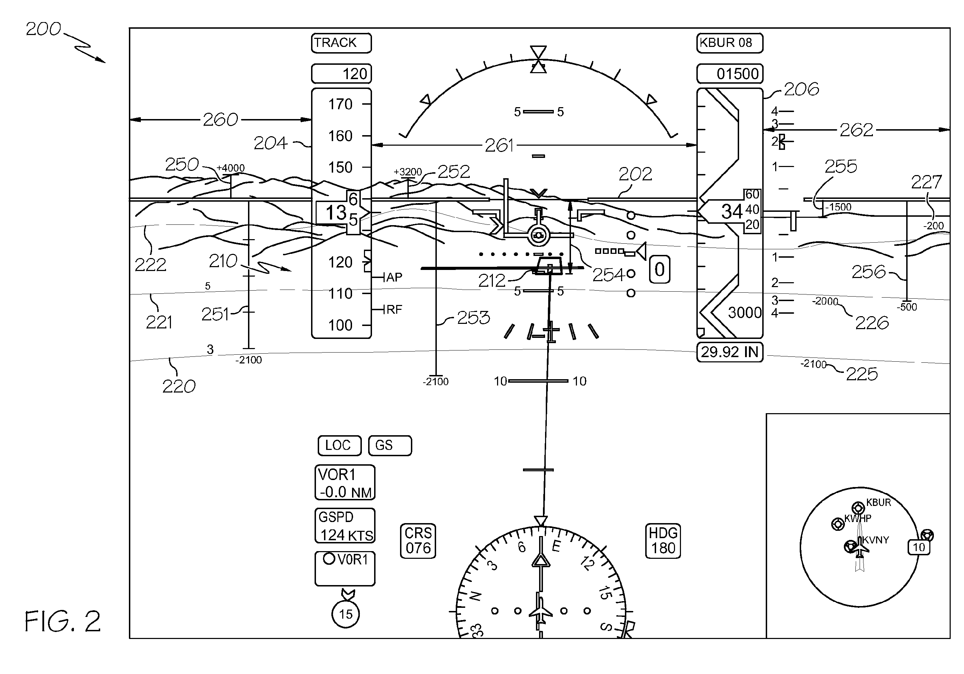

An exemplary visual display 200 is shown in FIG. 2. The visual display 200 is an exemplary visual display that may be rendered, for example, by the aircraft display system 100 of FIG. 1.

The visual display 200 shows, among other things, computer generated symbols representing a zero pitch reference line 202, an airspeed scale or tape 204, and an altitude scale or tape 206. Although the visual display 200 is shown as an egocentric, first-person frame of reference, the visual display 200 can be a secondary, wingman, and/or plan or perspective view that enables a viewer to view the aircraft, as well as zoom in and out, including an unmanned vehicle and/or spacecraft. Although the visual display 200 is generally associated with a Primary Flight Display, the display can also be utilized on a multi-function display, Head Up Display, and/or a head mounted display.

In this embodiment, the visual display 200 further includes terrain (e.g., identified generally as element 210). Terrain 210 is rendered as a three-dimensional, perspective view, and can include any representation of the environment surrounding the aircraft, including flattened terrain. Additionally, the terrain 210 can include a virtual plane selected by a pilot at certain elevation relative to the aircraft and is rendered at that elevation. In one embodiment, terrain 210 includes natural and man-made obstacles, including building and navigational positions such as a runway 212.

Range rings 220-222 may also be provided on the visual display 200. The range rings 220-222 may be used to indicate sequential ranges, such as fixed distance or time ranges needed to travel to a position on the terrain 210, or any other information that may be useful to a pilot In the illustrated embodiment, the range rings 220-222 indicate distances from the aircraft. Each range ring 220-222 includes a range indicator, which displays the lateral distance from the aircraft's present position to the position that corresponds to the range ring 220-222 (e.g., 3 nautical miles). The range indicator may be set manually or automatically, via a non-illustrated pop-up menu.

In addition, and as will now be described in more detail, the visual display 200 may selectively render symbology to enhance terrain awareness, particularly awareness regarding the elevation of terrain 210. In one embodiment, the visual display 200 depicts the elevation of the terrain 210 relative to the zero pitch reference line 202 at one or more positions. As one example of symbology that indicates relative elevation, the range rings 220-222 may be provided with numerical labels 225-227 indicating the average elevation of the terrain 214 at each range ring 220-222. Additionally, in the depicted exemplary embodiment, relative elevations are illustrated by drop lines 250-256, although other mechanisms may also be used. The drop lines 250-256 illustrate the elevation at a position relative to the zero pitch reference line 202 to improve situational awareness. In addition, the drop lines 250-256 may be associated with a numerical indication of the elevation. For example, drop line 251 indicates an elevation of -2500 feet relative to the zero pitch reference line 202. In other words, the elevation of the terrain 220 at the point represented by the drop line 251 is 2500 feet below the zero pitch reference line 202.

The relative elevation of the terrain 210 can be provided at any desired position or area within the visual display 200. In one embodiment, one or more drop lines 250-256 can be provided in each of three regions 260-262. The first region 260 generally extends from the airspeed scale 204 to the edge of the visual display 200. The second region 261 generally extends from the airspeed scale 204 to the altitude scale 206, and the third region 262 generally extends from the altitude scale 206 to the edge of the visual display. In one embodiment, the visual display 200 can provide a drop line to the high point within each region above the zero pitch reference line 202, such as drop line 250 in region 260. Similarly, the visual display 200 can provide a drop line to the high point within each region below the zero pitch reference line 202, such as drop line 255 in region 262. Additionally, the visual display 200 can provide a drop line to the low point within each region, such as drop line 251 in region 260. This exemplary embodiment can present the user with high and low elevation points across the visual display 200 without undue clutter, although one or more of these categories of drop lines can be omitted or additional drop lines added. For example, only the lowest and/or highest elevations within the entire visual display 200 may be provided. Alternatively, if a charting application on the navigation display is plotting a particular instrument approach procedure (IAP), drop lines can be plotted to correlate with the obstacles displayed in the IAP.

In a further exemplary embodiment, the elevation of additional terrain features relative to the zero pitch reference line 202 can be displayed. For example, drop line 254 indicates the elevation of runway 212 relative to the zero pitch reference line. Additional drop lines at particular points of interest and/or obstacles can be provided as desired. The visual display system 100 may implement de-clutter algorithms to de-clutter the visual display 200 as desired, particularly during dynamic situations or based on phase of flight such as taxi, takeoff, departure, enroute, arrival, approach, and landing. As noted above, the drop lines 250-256 can be selectively rendered by manual selection or automatically, either across the display 200 or in a corridor of interest such as along a flight path.

Moreover, drop or rise lines, emanating from the zero pitch reference and including altitude deltas from current altitude may also be used to indicate climb or descent targets at a particular waypoint. In the current disclosure, the altitude is referenced as a positive or negative value to the zero pitch reference.

The drop lines may be preserved in turning flight, taking on an angular character, and be used to continuously reveal the heading conformality - including dynamic heading changes - of the referenced elevation points. That is, the drop lines emanate from the heading on the zero pitch reference that accurately represents the heading to the reference point. For instance, in straight flight heading 360, an object with a drop line initially at 355 will eventually have that drop line move to 350, then 345 as the aircraft passes the referenced object. However, if the aircraft were to turn to from 360 toward the object at 355 degrees, the object's drop line would move with the 355 degree mark until this heading was centered left-to-right on the display.

Moreover, drop line thickness, transparency, interposition, or other color, shape, and patterning, may be used to indicate relative distance or proximity in both the lateral and the vertical to assist in deconflicting various drop lines within a particular zone or area. Individual drop lines may moreover change along their vertical extents in thickness, transparency, interposition, or other color, shape, and patterning, to indicate relative height, distance, or proximity from the aircraft.

Furthermore, drop lines may be endowed with a graphical scale such that preset and regular altitude annotations, such as every 100 feet for minor tick marks, every 500 feet for intermediate tick marks, and every 1000 feet for major tick marks, are employed to give a general awareness and rule to the drop lines. One such example is shown by the drop line 251 in FIG. 2. Minor, intermediate, and major tick marks may follow the convention used in the altimeter scale for consistency.

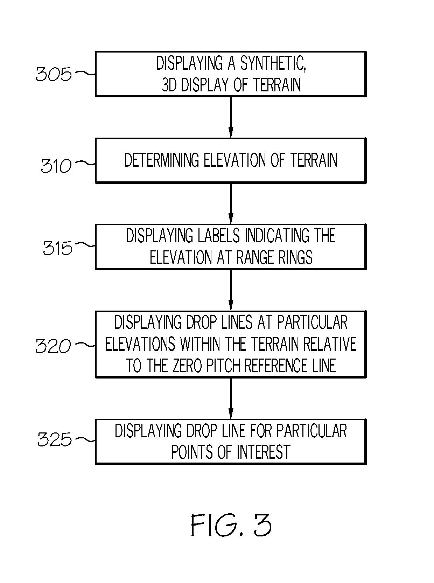

FIG. 3 is a flow chart that depicts a method 300 for enhancing obstacle and terrain profile awareness in 3D, synthetic view for a Primary Flight Display of an aircraft, such as for example, the system 100 discussed above. As such, the method 300 of FIG. 3 will be described additionally with reference to FIGS. 1 and 2.

In a first step 305, the processing unit 102 receives data from the database 104, flight management system 106, and/or sensor system 108 to form a synthetic, 3D display 200 of terrain 210, including a zero pitch reference line 202. In second step 310, the processing unit 102 determines the elevation of the terrain 210, for example, in various regions 260-262 of the display 200. In a third step 315, the processing unit 102 provides symbology such as labels indicating the elevation of the range rings 220-222 relative to the zero pitch reference line 202.

In a fourth step 320, the processing unit 102 may additionally provide drop lines 250-256 at particular elevations within the terrain 210. For example, drop lines 250-256 can be provided at the high point within a region 260-262 above the zero pitch reference line 202, at a high point within a region 260-262 below the zero pitch reference line 202, and at a lower point within a region 260-262. In a fifth step 325, the processing unit 102 may additionally provide drop line 250-256 for particular points of interest, such as airport 212. Of course, in the interest of aesthetics, de-cluttering, or user preference, certain drop lines can be added, deleted, and/or modified as necessary or desired.

Accordingly, the system 100 and the method 300 may enhance terrain profile awareness. Particularly, exemplary embodiments may provide an indication of terrain elevation at certain points within a visual display.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A display system (100) for an aircraft, comprising:
a processing unit (102) configured to receive terrain data and navigation data and to supply display commands with symbology based on the terrain data and navigation data; and
a display device (108) coupled the processing unit (102) and configured to receive the display commands and operable to render a three-dimensional view (200) with the symbology, the symbology (202, 210, 220-222, 225-227, 250-256) comprising terrain (210), a zero pitch line (202), and elevation symbology (250-256) indicating a relative elevation between the zero pitch line (202) and a position in the view (200).

2. The display system (100) of claim 1, wherein the position in the view (200) is on the terrain (210).

3. The display system (100) of claim 1, wherein the symbology (202, 210, 220-222, 225-227, 250-256) further includes a range ring (220-222), and wherein the symbology further includes a label (225-227) indicating the relative elevation at the range ring (220-222).

4. The display system (100) of claim 1, wherein the elevation symbology (250-256) includes a drop line (250-256) between the zero pitch line (202) and the position, the position being in the terrain (210).

5. The display system (100) of claim 4, wherein the position is a high point within the terrain (210) above the zero pitch line (202).

6. The display system (100) of claim 4, wherein the position is a high point within the terrain (210) below the zero pitch line (202).

7. The display system (100) of claim 4, wherein the position is a low point within the terrain (210).

8. The display system (100) of claim 4, wherein the terrain (210) includes a landing area, and wherein the position is at the landing area.

9. The display system (100) of claim 4, wherein the position is a target or landing area.

10. The display system (100) of claim 4, wherein the symbology (202, 210, 220-222, 225-227, 250-256) includes a plurality of the drop lines (250-256), and wherein at least one of the drop lines (250-256) is displayed in a number of regions (260, 261, 262) defining the view (200).
